# EUROPEAN PATENT APPLICATION

(11) **EP 4 686 037 A1**
(43) Date of publication of application: **28.01.2026**
(21) Application number: 25158153.4
(22) Date of filing: 15.02.2025
(51) Int. Cl.: H02J 3/38, H02J 15/00, F02C 6/14, F25J 1/00

(54) **A HYBRID ENERGY MANAGEMENT SYSTEM INTEGRATING ENERGY PRODUCTION, DISTRIBUTION, CONSUMPTION, AND CRYOGENIC LIQUEFIED AIR ENERGY STORAGE (LAES), ALONG WITH A METHOD FOR OPTIMIZING LAES EFFICIENCY**

(30) Priority: 27.02.2024 PL 44786724
(71) Applicant: Jezewska, Elzbieta, 55-200 Olawa (PL); Jezewski, Andrzej, 55-200 Olawa (PL)
(72) Inventor: Jezewska, Elzbieta, 55-200 Olawa (PL); Jezewski, Andrzej, 55-200 Olawa (PL); Jezewski, Wojciech, 55-200 Olawa (PL)
(74) Representative: Gornicki, Pawel

(57) **Abstract**

The integrated hybrid system for managing the production, flow, consumption and storage of energy is characterised in that it comprises a cryogenic liquefied air energy storage (7), to which, either upstream and/or downstream of the compressor, an system for transporting oxygen (D) obtained from the electrolyzer (11) is connected, while an system supplying heat (B) obtained during combustion of gas in the trigeneration unit (9) is incorporated in the liquid air and/or oxygen expansion station of the cryogenic liquid air energy storage (LAES) (7), wherein all energy processing and storage units are incorporated in the control and supervision system, collecting data in real time, monitoring the production, consumption and demand for electrical energy, and intelligently controlling energy flow between generation sources, powered devices and energy storage units.

## Description

The invention relates to a hybrid energy management system integrating energy production, distribution, consumption, and storage of energy derived from renewable sources, and optionally supplemented by conventional auxiliary power sources (natural gas, biogas). This generally relates to systems, devices, structures, and methods for controlling the generation, consumption, stability, and reliability of electrical energy within a microgrid. The invention further relates to a method for improving the efficiency of a cryogenic liquefied air energy storage.

Traditional energy supply systems rely on centrally generated energy, such as electricity, thermal energy (e.g., hot water or superheated steam for heating networks), or chemical energy (e.g., natural gas), and distribute this energy to end-users via dedicated supply networks.
In order to become independent from energy supplies from the mains, microgrids based on the production, processing and use of energy from renewable sources are being built within specific production plants, housing estates and communes.

Microgrids are known as self-sufficient hybrid energy systems that create an integrated electricity, heat and gas network, connecting many generation, storage and dynamic load devices. Microgrids are interconnected and controlled using advanced algorithms to function as a unified energy generation and management system. Microgrids minimize environmental impact and significantly reduce costs by utilizing local energy resources, and further enhance economic efficiency by selling surplus energy back to the grid during peak price periods.

A typical microgrid configuration comprises a combination of renewable energy generation, energy storage, and advanced control infrastructure. Renewable energy sources may include solar photovoltaic arrays (either discrete installations or building-integrated systems), wind turbines (configured with horizontal or vertical axes), and hydro turbines. Energy storage is commonly implemented using kinetic energy storage systems and battery energy storage systems. Furthermore, high-efficiency cogeneration systems, optionally coupled with hydrogen storage and electrolyzer units, may be integrated. These elements are interconnected and governed by comprehensive power supply, energy distribution, control, and supervisory infrastructure.

Chimney turbine systems, utilised in regions with consistent year-round sunlight, employ solar energy to generate a heated airflow. The buoyant updraft drives base-mounted turbines, generating negative pressure that draws in ambient air at the tower's base. The heated air undergoes cooling within the tower chimney and is subsequently discharged to the ambient atmosphere.

Also known is a gravitational energy storage device in which a cylindrical internal shaft contains a system for converting energy from condensed air stored in the tanks arranged on at least one level designated inside the cylindrical inner core, and the system for converting energy from condensed air is connected to the electrical energy storage system and/or or with the power grid. In the storage space, between radially arranged ballast beam sections, there are wind turbines whose operation is based on the thermodynamic flow of air which moves vertically upwards from the inlet channels propelling the wind turbine blades into motion and thus generating electricity.

Liquid Air Energy Storage (LAES) is a cryogenic energy storage system. The apparatus draws ambient air, compresses the air, then cools the compressed air to condensation temperature, and pumps the condensed air into insulated low-pressure tanks. Under these conditions, the air undergoes a phase change to a liquid state. In its liquefied state, the air exerts a significantly lower pressure on the tank walls. Furthermore, the liquid state enables storage of a greater quantity of air within a given volume compared to the gaseous state. The liquefied air is storable for extended periods, such as for hours or days. Upon demand, the storage means directs a portion of the liquefied air into a vaporization chamber, where the liquefied air is heated to induce rapid expansion. The rapid increase in expanded gas volume rotates a turbine to generate electricity.

Existing hybrid energy conversion and storage systems, while attempting comprehensive energy management, rely on each constituent system operating at its inherent efficiency.

Advantageously, byproducts from a first subsystem are utilised to enhance the performance of a second subsystem, thereby improving overall system efficiency.

It is an objective of the present invention to provide an integrated hybrid system that addresses limitations of prior systems in managing energy production, flow, consumption, and storage, and achieves enhanced overall efficiency. In particular, such an energy supply system should enable efficient energy distribution. Furthermore, such a system should be robust and stable and insensitive to power peaks.

A further objective of the invention is to provide an integrated hybrid system for energy management that facilitates the efficient utilization of renewable energy sources, such as wind and solar, recognising that their energy output is inherently variable and primarily dependent on meteorological conditions.

A further objective of the invention is to devise a method for enhancing the efficiency of a cryogenic liquefied air energy storage device, the method utilizing a trigeneration system and oxygen derived from an electrolyzer, these components being elements of a hybrid energy management system.

These and further objectives are accomplished through an integrated hybrid system for managing energy production, energy flow, energy consumption, and energy storage, as particularly defined by the features of the independent claim. Further advantageous embodiments are given in the dependent claims.

Where the description refers to an oxygen transport installation, a hydrogen transport installation, an electricity transport installation, a heat transport installation, or a cold transport installation, it is understood to refer to conventional installations comprising all necessary components for transport, such as heat exchangers, fans, valves, meters, transducers, and fuses, among others. Those skilled in the relevant art will be able to select such components without significant effort, depending on factors including the type, dimensions, functional parameters, or transmission capabilities of the particular devices and storage systems under consideration

When the description refers to heat flow or cold flow, it signifies warm or cold air derived from the ventilation of heat exchangers employing a flowing medium, for instance, glycol or molten salt.

The essence of the invention resides in an integrated hybrid system for managing energy production, flow, consumption and storage comprising at least a photovoltaic system and/or a wind turbine, a kinetic energy storage, an electrolyzer, a cogeneration unit within a trigeneration system, a hydrogen storage facility, a control and supervision system, characterised in that it comprises a cryogenic liquid air energy storage (LAES), to which, either upstream and/or downstream of the compressor, an installation for transporting oxygen obtained from the electrolyzer is connected, while an installation supplying heat obtained during combustion of gas in the trigeneration unit is incorporated in the liquid air and/or oxygen expansion station of the cryogenic liquid air energy storage (LAES), wherein all energy processing and storage units are incorporated in the control and supervision system, collecting data in real time, monitoring the production, consumption and demand for electrical energy, and intelligently controlling energy flow between generation sources, powered devices and energy storage units.

It is advantageous for the cryogenic liquefied air energy storage (LAES) facility to incorporate, downstream of the compressor in the hot air discharge line to the storage facility, a proportional three-way valve. This valve preferably has its priority port connected to a heat storage facility and its side port connected to a steam exchanger, which is, in turn, coupled to a steam turbine generator system. This steam turbine generator system further incorporates a superheated steam supply installation feeding the steam turbine, which drives a power generator, and an electricity transmission installation connected to the power generator.

It is advantageous for the cogeneration unit within the trigeneration system to be a hydrogen engine, which is connected via a hydrogen transport installation to a hydrogen storage tank.

It is advantageous for the energy production source to be an agrophotovoltaic system, which is connected via an electricity transmission installation to at least one of a generation source, a power supply device, or an energy storage device. The agrophotovoltaic system is also connected via a water installation to at least one of an electrolyzer or a post-electrolysis water tank.

It is advantageous when the agrophotovoltaic system is connected by an electricity transmission line to the electrolyser and/or to the power grid.

It is advantageous when the kinetic energy store is a gravitational energy store.

It is advantageous when the gravitational energy storage device, inside the cylindrical inner shaft, has a system for converting energy from liquefied air.

It is advantageous when the gravitational energy storage device, inside the cylindrical inner core, has a trigeneration system with a hydrogen engine.

It is advantageous when the gravitational energy storage device has photovoltaic panels on the outer surface of the cylindrical outer shaft.

It is advantageous when the wind turbine is a chimney turbine.

It is advantageous when the chimney turbine is located inside the cylindrical outer shaft of the gravitational energy storage.

It is also advantageous if the chilled water absorption unit exchanger from the trigeneration system is connected by a cold air transmission system to the upper sections of the turbine chimneys in order to generate a stronger air stream to drive the turbines.

It is advantageous if the cogeneration module of the trigeneration unit is connected by heat transfer systems to the lower sections of the turbine chimneys in order to generate a stronger air flow to drive the turbines.

It is advantageous if the ventilation systems of the units incorporated in the system are connected by heat transfer installations to the lower sections of the turbine chimneys in order to generate a stronger air flow to drive the turbines.

It is advantageous when the units generating and storing electrical energy are connected to the power grid by transmission lines.

The electricity generated in the system is fed into the grid or individual energy conversion units are powered.

Surplus power from the grid can also be used to power energy conversion units. The system then acts as a grid stabilizer and locally enables the grid to operate without the need for the dispatcher to switch off the RES units.

The essence of the invention also extends to a method of increasing the efficiency of a cryogenic liquefied air energy storage facility, consisting in that oxygen obtained from an electrolyser is supplied to the compression station of the cryogenic liquefied air energy storage facility through an oxygen transport system, then a mixture of liquefied oxygen and liquefied air or an oxygen-enriched air mixture is condensed and stored at a temperature higher than the air condensation temperature for a given-pressure, while a system supplying heat obtained during the combustion of gas in a trigeneration system is incorporated in the liquid oxygen expansion station of the cryogenic LAES facility.

It is advantageous when, by means of a heat transfer system, the heat flow from the cryogenic liquefied air energy storage facility, obtained and/or unused during the compression and/or expansion of air, is fed to the lower parts of the turbine tunnel in order to generate a stronger air flow to drive the turbines.

It is advantageous for the heat, in the form of superheated steam generated during air compression, to be distributed by a proportional three-way valve and directed to a steam exchanger. From the steam exchanger, the superheated steam is then fed to a turbine generator, and the electricity generated is transmitted via an electrical energy transmission system to powered devices, energy storage devices, or the grid.

The hybrid system for energy management according to the invention facilitates the integration of all energy generation, supply, and storage units into a cohesive and robust energy management framework.

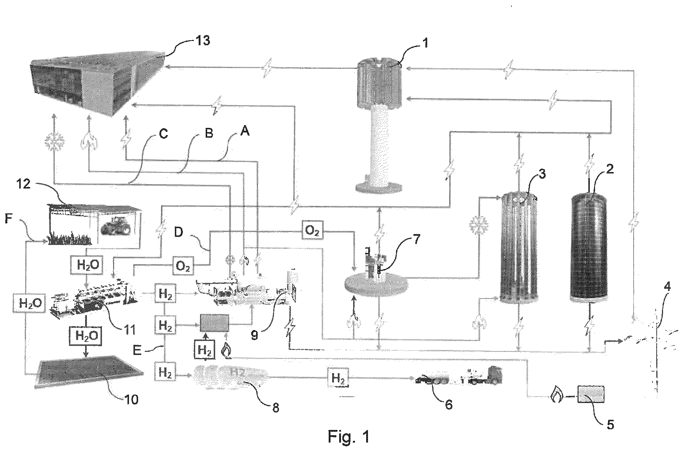

A further advantage is utilizing byproducts and waste from individual units for enhancing the efficiency of cryogenic liquid air energy storage (LAES).
The invention is further described, without limiting the scope of protection, by way of embodiment examples and with reference to the drawing, wherein Figure 1 illustrates a connection diagram of the sources, processing systems, and storage of electrical energy, and where:
- 1 -: kinetic energy storage;
- 2 -: photovoltaic system;
- 3 -: chimney turbine set;
- 4 -: power grid
- 5 -: gas tank (natural or biogas);
- 6 -: hydrogen charging station;
- 7 -: cryogenic liquefied air energy storage (LAES);
- 8 -: hydrogen storage;
- 9 -: trigeneration unit;
- 10 -: electrolysis water tank; 1
- 11 -: proton exchange membrane electrolyzer;
- 12: - AHE agrophotovoltaics;
- 13 -: utility building. Designations of transmission systems:
- A -: electricity transmission line;
- B -: heat transfer system;
- C -: cold transmission system;
- D -: oxygen transport system;
- E -: hydrogen transport system;
- F -: water transport system;
The integrated hybrid system for energy management, encompassing generation, flow, consumption, and storage, comprises sets of energy generation sources, powered devices, and energy storage devices, characterised by the following technical parameters:

### Gravitational energy storage system (1)

- Installed power: 5MW
- Capacity: 35 MWh
- Charging time: 7h
- Discharging time: 7h
- Weight of blocks 84,000 tons
- Absolute lifting height: 150m
- Number of ballasts: 1400 pcs.
- Weight of 1 ballast block: 60,000 kg
- Dimensions of 1 ballast 21 x 1.5 x 0.8 m
- Overall dimensions
   o Height 212 m
   o Outer cylinder diameter 76 m

### Chimney turbine set (3)

- Installed capacity 6 MWp

### photovoltaic system (2)

- Installed capacity 15 MWp
- Solar panels placed on the facade of the gravitational energy storage

### trigeneration unit (9) with hydrogen engine

- Installed capacity 0.99 MWe
- Thermal power 1.2 MWt
- Cooling power: 0.85 MWt

### agrophotovoltaics system (12)

- Installed capacity 40 MWp
- Rainwater storage with irrigation system
- Soil, crop and weather condition monitoring system

### PEM electrolyzer assembly (11)

- Generation capacity: 5MW
- Production volume 1000 Nm³/h

### hydrogen storage (8)

- Capacity: 1080 kg at 500 bar

### LAES - Cryogenic Liquefied Air Energy Storage unit (7)

- Capacity: 120 MWh
- Liquid air pressure: 17bar
- Liquid air temperature: -157°C
- Liquid oxygen temperature: - 147°C

Gravitational energy storage system (1) Inside the cylindrical outer core, in the space between radially arranged sections of ballast beams, there are wind turbines whose operation is based on the thermodynamic flow of air which moves vertically upwards from the inlet channels propelling the wind turbine blades into motion and thus generating electricity.
The energy generated by the operation of the tower's (3) wind turbines powers the engines in the next energy conversion unit.

The cold stream from the LAES (7) obtained at the outlet at a temperature of approx. 5°C is fed through the cold transfer system (C) to the upper part of the turbine chimneys (3) in order to generate a stronger air stream to drive the turbines. The cooled glycol is directed to the water jacket and the obtained cold is transported to the cold transfer system (C) and delivered to the upper parts of the turbine chimneys (3).

The heat flow from the trigeneration unit (9), obtained during hydrogen combustion in the hydrogen engine, and from the electrolyzer (11) is fed to the lower parts of the turbine chimneys in order to generate a stronger air flow to drive the turbines.

The ventilation systems of all units incorporated in the system can be connected by heat transfer systems (B) to the lower parts of the turbine chimneys (3).

The gravitational energy storage (1), inside the cylindrical inner core, has a cryogenic liquefied air energy storage unit LAES (7) at the lower levels - a system for converting energy from liquefied air, which is connected by an electrical energy transmission line (A) to the electrical energy storage system and to the power grid (4). Its tanks are arranged on two levels inside the cylindrical inner core of the storage (1).

Via the air suction path, the cryogenic liquefied air energy storage LAES (7) is connected to the oxygen transport system (D) to a line supplying oxygen obtained in the electrolyzer (11), which enriches the air with oxygen and results in an increase in the condensation temperature of the mixture, thus reducing the energy input needed to cool the oxygen and air mixture and condense it. When compressed to 17 bar, the liquified air temperature rises to -150°C. During the condensation of air, heat is released which is stored hot in molten salt at 430°C or in glycol at 185°C.

Upon demand, the storage means directs a portion of the liquefied air into a vaporization chamber, where the liquefied air is heated by the stored heat and compressed. This allows to obtain gas at very high pressure. It is used to drive turbines that produce electricity which is then transmitted through an electricity transmission system (A) to the power grid (4). Upon expansion, liquid air releases cold energy as it evaporates, which is then stored within the thermal bed at a temperature of -140°C."

To increase the efficiency of the system, the heat obtained from the hydrogen engine in the trigeneration unit (9) is supplied via a heat transfer system (B) to heat buildings (13) and to discharge the LAES (9) (liquefied air expansion). This increases the efficiency of the system from 50% to approximately 75%.

The fuel source in trigeneration can also be natural gas or biogas supplied from the pipeline network and/or a gas tank (5). Natural gas can also be mixed with hydrogen and fed to trigeneration (9).

A hydrogen storage facility (8) is connected to the proton exchange membrane electrolyzer (11) and the hydrogen transfer system (E), and also connected to the hydrogen engine of the trigeneration unit (9). The hydrogen storage facility (8) is necessary to properly manage the demand for electricity and heat generated in the cogeneration system. It can also power a hydrogen vehicle charging station (6).

In another embodiment of the inventive system, the energy generation source is an AHE agrophotovoltaic unit (12). In this variant, the proton exchange membrane electrolyzer (11) is supplied with rainwater collected from photovoltaic panels, while the water from the electrolysis water tank (10) supplies the irrigation system via the water transport system (F). The electrical energy generated by the photovoltaic panels (2, 12) and wind turbines (3, 12) via the electrical energy transmission line (A) supplies the electrolyzer (11), the system power supply devices or energy storage devices or the power grid (4).

A control and supervision system integrates all energy conversion and storage units, enabling real-time data collection, electrical energy monitoring (generation, consumption, demand), and intelligent energy flow control between sources, devices, and storage.

The present invention is not limited in scope to the specific embodiments described herein. A person skilled in the art will derive various other modifications of the present invention from the description and drawings, which also fall within the scope of protection of the claims. The cryogenic LAES can be a peripheral device, outside the gravitational energy storage, similar to a trigeneration hydrogen engine, PV system or chimney wind turbines.

## Claims

1. An integrated hybrid system for managing energy production, flow, consumption and storage comprising at least a photovoltaic system and/or a wind turbine, a kinetic energy storage, an electrolyzer, a cogeneration unit within a trigeneration system, a hydrogen storage facility, a control and supervision system, **characterised in that** it comprises a cryogenic liquid air energy storage (LAES) (7), to which, either upstream and/or downstream of the compressor, an system for transporting oxygen (D) obtained from the electrolyzer (11) is connected, while an system supplying heat (B) obtained during combustion of gas in the trigeneration unit (9) is incorporated in the liquid air and/or oxygen expansion station of the cryogenic liquid air energy storage (LAES) (7), wherein all energy processing and storage units are incorporated in the control and supervision system, collecting data in real time, monitoring the production, consumption and demand for electrical energy, and intelligently controlling energy flow between generation sources, powered devices and energy storage units.

2. Integrated hybrid system according to claim 1, **characterised in that** the cryogenic liquified air energy storage (7), in the system discharging superheated steam generated during air compression to the heat storage, comprises a proportional three-way valve whose priority port is connected to the heat storage and the side port is connected to the system supplying superheated steam to the steam turbine with a power generator.

3. Integrated hybrid system according to claim 1, **characterised in that** the cogeneration unit in the trigeneration system (9) is a hydrogen engine connected via a hydrogen transport system (E) to a hydrogen tank (8).

4. Integrated hybrid system according to claim 1, **characterised in that** the energy generation source is an agrophotovoltaic system (12) connected via an electrical energy transmission line (A) to at least one generation source, a power supply device or an energy storage device, and connected via a water system (F) to an electrolyzer (9) and/or to a tank of electrolysis water (10).

5. Integrated hybrid system according to claim 4, **characterised in that** the agrophotovoltaic system (12) is connected via an electrical energy transmission line (A) to the electrolyzer (9) and/or to the power grid (4).

6. Integrated hybrid system according to claim 1, **characterised in that** the kinetic energy store (1) is a gravitational energy storage.

7. Integrated hybrid system according to claim 6, **characterised in that** the gravitational energy storage (1), inside the cylindrical inner core, has a system for converting energy from liquefied air (7).

8. Integrated hybrid system according to claim 6, **characterised in that** the gravitational energy storage (1), inside the cylindrical inner core, has a trigeneration system (9) with a hydrogen engine.

9. Integrated hybrid system according to claim 6, **characterised in that** the gravitational energy storage (1) has photovoltaic panels (2) on the outer surface of the cylindrical outer core.

10. An integrated hybrid system according to claim 1, **characterised in that** the wind turbine is a chimney turbine (3).

11. Integrated hybrid system according to claim 10, **characterised in that** the chimney turbine (3) is located inside the cylindrical outer core of the gravitational energy storage (1).

12. Integrated hybrid system according to claim 1 or 10, **characterised in that** the exchanger of the chilled water absorption unit of the trigeneration system (9) is connected by a cold air transmission system (C) to the upper parts of the turbine chimneys (3) in order to generate a stronger air flow for driving the turbines.

13. Integrated hybrid system according to claim 1 or 10, **characterised in that** the cogeneration module of the trigeneration unit is connected by heat transfer systems to the lower parts of the turbine chimneys in order to generate a stronger air flow for driving the turbines.

14. Integrated hybrid system according to claim 1 or 10, **characterised in that** the ventilation systems incorporated in the system are connected by heat transfer systems (B) to the lower parts of the turbine chimneys (3) in order to generate a stronger air flow for driving the turbines.

15. Integrated hybrid system according to claim 1, **characterised in that** the units generating and storing electrical energy are connected to the power grid (A) by means of transmission lines.

16. A method of increasing the efficiency of a cryogenic liquefied air energy storage facility, **characterised in that** oxygen obtained from an electrolyser is supplied to the compression station of the cryogenic liquefied air energy storage facility through an oxygen transport system, then a mixture of liquefied oxygen and liquefied air or an oxygen-enriched air mixture is condensed and stored at a temperature higher than the air condensation temperature for a given pressure, while a system supplying heat obtained during the combustion of gas in a trigeneration system is incorporated in the liquid oxygen expansion station of the cryogenic LAES facility.

17. A method according to claim 16, **characterised in that** by means of a heat transfer system, the heat flow from the cryogenic liquefied air energy storage facility, obtained and/or unused during the compression and/or expansion of air, is fed to the lower parts of the turbine tunnel in order to generate a stronger air flow to drive the turbines.

18. A method according to claim 16, **characterised in that** the heat, in the form of superheated steam generated during air compression, to be distributed by a proportional three-way valve and directed to a steam exchanger. From the steam exchanger, the superheated steam is then fed to a turbine generator and the electricity generated is transmitted via an electrical energy transmission system to powered devices, energy storage devices, or the grid.
